# EUROPEAN PATENT SPECIFICATION

(11) **EP 4 276 472 B1**
(45) Date of publication and mention of the grant of the patent: **03.12.2025**
(21) Application number: 22172701.9
(22) Date of filing: 11.05.2022
(51) Int. Cl.: G01P 1/02, G01D 11/24

(54) **TERMINAL ASSEMBLY FOR A DIRECTIONALLY DEPENDENT SENSOR, DIRECTIONALLY DEPENDENT SENSOR, AND METHOD FOR MANUFACTURING THE TERMINAL ASSEMBLY**
ANSCHLUSSVORRICHTUNG FÜR EINEN RICHTUNGSABHÄNGIGEN SENSOR, RICHTUNGSABHÄNGIGER SENSOR UND VERFAHREN ZUM HERSTELLEN DER ANSCHLUSSVORRICHTUNG
ENSEMBLE TERMINAL POUR UN CAPTEUR DÉPENDANT DE LA DIRECTION, CAPTEUR DÉPENDANT DE LA DIRECTION ET PROCÉDÉ DE FABRICATION DE L'ENSEMBLE TERMINAL

(43) Date of publication of application: 15.11.2023
(73) Proprietor: KNORR-BREMSE Systeme für Nutzfahrzeuge GmbH, 80809 München (DE)
(72) Inventor: KUMBHAR, Sagar, 411018 Pune (IN); JAWARIKAR, Pravin Narayan, 444303 Khamgaon Teh. Khamgaon (IN); LECHNER, Klaus, 91362 Pretzfeld (DE); ROHSE, Tobias, 71701 Schwieberdingen (DE); PALZER, Stefan, 94496 Ortenburg (DE)

(56) References cited:
- EP-A1- 2 889 628
- FR-A1- 3 024 232
- US-A1- 2011 260 305

## Description

The invention relates to a terminal assembly for a directionally dependent sensor, a directionally dependent sensor, and a method for manufacturing the terminal assembly, in particular, a terminal assembly for an active wheel speed sensor.

Nowadays, a detection of a wheel speed of individual wheels of a vehicle is necessary to enable a function of assistance systems, such as anti-lock braking systems, traction control systems, or electronic stabilization programs. Thereby, an exact detection of the wheel speed is necessary for controlling respective algorithms in border situations. In order to exactly detect the wheel speed, wheel speed sensors are known which are arranged in the region of a wheel in order to detect the wheel speed directly without deviations of a mechanical transmission.

Furthermore, among others, in order to provide signals having a constant amplitude independent from the wheel speed, active wheel speed sensors are used. Such active wheel speed sensors have a defined detection direction in which a motion of an actuator can be detected. Therefore, an installation in a predefined alignment of the active wheel speed sensor with respect to the actuator is necessary.

However, due to restrictions of the installation space, in the case of wheel speed sensors having a longitudinal shape, it is necessary to provide a cable outlet not only in an axial direction at an end of the wheel speed sensor but also to provide a radial cable outlet. Thereby, there is the problem that, depending on the available installation space, the radial cable outlet of the wheel speed sensor also has to be provided in different angular positions. This increases the cost of the production because the housing of the sensors is usually manufactured by a molding process and, therefore, different molds for the wheel speed sensors with the cable outlets in different angular positions are necessary.

Document FR 3 024 232 A1 discloses an electronic module comprising a terminal assembly having first terminal areas to be connected to a supply line, a ground line, and a signal line and several second terminal areas configured to form a plug connector. The terminal assembly comprises a busbar having the second terminal areas arranged in-line and a housing partially enclosing the busbar. The busbar is configured to be disconnected between two specific ones of the second terminal areas to provide a specific plug pattern in one single direction.

In document US 2011/206305 A1, a power semiconductor device packaging is disclosed. First terminal areas are selectively connectable with second terminal areas by removing, cutting, trimming, retaining, or extending connection elements between the first and second terminal areas in order to provide a specific plug pattern in one direction.

Document EP 2 889 628 A1 shows a hall sensor device. After the manufacturing step of molding of the hall sensor device, connections between two output pins, being terminal areas directed in one direction, are removed.

Therefore, the object underlying the invention is to remedy the above disadvantage and to provide a terminal assembly for a directionally dependent sensor which enables an economic provision of directionally dependent sensors for various installation spaces.

The object is achieved by a terminal assembly according to claim 1, a directionally dependent sensor according to claim 8 and a method according to claim 10. Advantageous further developments of the invention are included in the dependent claims.

According to an aspect of the invention, a terminal assembly for a directionally dependent sensor comprises a busbar and a housing, wherein the busbar comprises two first terminal areas configured to be connected to a sensor element, and three second terminal areas configured to respectively form a plug connector. A first one of the first terminal areas, the three second terminal areas and a second one of the first terminals are arranged in-line, and the housing is configured to partially enclose the busbar such that the second terminal areas are exposed. The busbar is configured to provide a plug pattern having two adjacent plug connectors configured to be connectable to a double-pole female connector, which plug pattern is configured to be formed by two adjacent ones of the three second terminal areas by disconnecting the busbar between the two adjacent ones of the three second terminal areas, wherein, depending on the two adjacent ones of the three second terminal areas between which the busbar is disconnected, two different plug patterns are formed.

Due to the provision of exposed different plug patterns formed by disconnecting the busbar between two adjacent second terminal areas, an easy selection of an active plug pattern is possible such that an identical base material can be used for different terminal assemblies. Therefore, an economic provision of directionally dependent sensors for various installation spaces is possible.

In an advantageous implementation of the terminal assembly, the bus bar comprises a predefined cutting-out section, wherein the busbar is configured to be disconnected by cutting-out the predefined cutting-out section between the two adjacent ones of the three second terminal areas in order to form the plug pattern.

The predefined cutting-out section can be a section which is marked on the busbar or it can be a virtual section, the location and the size of which is predefined and realized by an appropriate tool.

This is an easy and cost-effective way for disconnecting the adjacent ones of the second terminal areas in order to ensure a sufficient distance between the plug connectors so that no short circuit can happen.

According to the invention, the bus bar is basically U-shaped having legs respectively having a first end and a second end, the first ends being connected by a bar portion forming the U-basis, and the legs form an open side at the second ends, wherein the two first terminal areas are located in regions of the second ends of the legs at the open side, and the three second terminal areas are located in a region of the busbar at an opposite side being opposite with respect to the open side.

Due to the U-shaped busbar, the terminal assembly can be formed in a space-saving manner so that a reduced installation space is possible.

Further, according to the invention, a direction from the open side to the opposite side of the bus bar is defined as a first direction and a direction enclosing an angle with the first direction is defined as a second direction. The plug connector formed by a first one of the three second terminal areas extends in the first direction, the plug connector formed by a second one of the three second terminal areas extends in the first direction and in the second direction, and the plug connector formed by a third one of the three second terminal areas extends in the second direction. Therefore, by disconnecting the busbar between the first one and the second one of the three second terminal areas, the plug pattern is formed such that the female connector is connectable in the first direction, and, by disconnecting the busbar between the second one and the third one of the three second terminal areas, the plug pattern is formed such that the female connector is connectable in the second direction.

The fact that the first direction and the second direction enclose an angle means that the first direction and the second direction are not parallel. The angle enclosed by the first direction and the second direction can be a square angle such that, for example, the first direction is aligned with a longitudinal shape of the sensor, and the second direction is a direction perpendicular to the longitudinal shape of the sensor. On the other hand, when the first direction is aligned with the longitudinal shape of the sensor, the second plug pattern can be arranged such that the female connector can be plugged in another predefined suitable angle.

In a further advantageous implementation of the terminal assembly, the region of the bus bar at the opposite side forms a plane, and the plug connectors extending in the second direction enclose an angle with the plane.

Due to this implementation, a direction for plugging the female connector to the plug connectors can also be defined in a suitable angular position in the radial direction so that, as the case may be, the installation space can be used in a more effective manner.

According to a further advantageous implementation of the terminal assembly, the housing of the terminal assembly is configured to enclose the busbar providing the plug pattern either formed such that the female connector is connectable in the first direction or such that the female connector is connectable in the second direction.

When the identical housing is suitable for the terminal assembly having different connection directions, no different molds are necessary for manufacturing the terminal assemblies having these different characteristics which saves costs.

In a further advantageous implementation of the terminal assembly, the housing is configured to partially enclose the busbar such that the first terminal areas are exposed.

When the first terminal areas are exposed, a point in time when the sensor element is connected to the busbar can be flexibly chosen in order to optimize a sequence of the manufacturing steps.

Due to a further advantageous implementation of the terminal assembly, it comprises a housing configured to be manufactured by overmolding the busbar with a material of the housing. This is an easy and cost-effective manner for manufacturing the terminal assembly.

In a further advantageous implementation of the terminal assembly, the busbar is surrounded by a frame and the frame is connected to the busbar in sections.

The frame connected to the busbar enables maintaining of the shape and the position of the busbar even if the busbar is disconnected due to the formation of the plug pattern which, in turn, enables a defined shape and location of the busbar for being overmolded to enable a cost-effective production.

According to the further aspect of the invention, a directionally dependent sensor comprises a terminal assembly, a sensor element connected to the two first terminal areas of the busbar, and a sensor housing joined to the housing of the terminal assembly.

When the directionally dependent sensor comprising the terminal assembly is provided, different connection directions are possible without the need of various molds for the housing of the terminal assembly.

In an advantageous implementation of the directionally dependent sensor, it is configured to be an active wheel speed sensor.

In order to provide signals having a constant amplitude independent from the wheel speed, active wheel speed sensors are used. Due to the option to easily provide the active wheel speed sensors as the directionally dependent sensor having different connection characteristics, the direction of connection of the sensors can be selected in a cost-effective way.

According to a further aspect of the invention, a method for manufacturing a terminal assembly comprises the steps: providing a busbar having three second terminal areas respectively forming a plug connector; disconnecting the busbar between two adjacent ones of the three second terminal areas by cutting-out a section of the bus bar between the two adjacent ones of the second terminal areas for forming a plug pattern connectable to a double-pole female connector; and enclosing the busbar with a housing such that the three second terminal areas are exposed.

By this method, an easy selection of an active plug pattern is possible such that an identical base material can be used for different terminal assemblies which enables flexibility during production.

According to the invention, the bus bar is basically U-shaped having legs respectively having a first end and a second end, the first ends being connected by a bar portion forming the U-basis and the legs form an open side at the second ends, wherein two first terminal areas configured to be connected to a sensor element are located in regions of the second ends of legs of the busbar at the open side, and the three second terminal areas are located in a region of the busbar at an opposite side being opposite with respect to the open side. A direction from the open side to the opposite side is defined as a first direction and a direction enclosing an angle with the first direction is defined as a second direction. A plug connector formed by a first one of the three second terminal areas extends in the first direction, a plug connector formed by a second one of the three second terminal areas extends in the first direction and in the second direction, and a plug connector formed by a third one of the three second terminal areas extends in the second direction, and a plug pattern having two adjacent plug connectors is configured to be connectable to a double-pole female connector. A section is cut-out between the first one of the three second terminal areas and the second one of the three second terminal areas such that the plug connectors forming the plug pattern extend in the first direction, or, alternatively, the section is cut-out between the second one of the three second terminal areas and the third one of the three second terminal areas such that the plug connectors forming the plug pattern extend in the second direction.

By such a method, the terminal assembly can be formed in a space-saving manner so that a reduced installation space is possible while a flexibility for providing a terminal assembly having different directions for being connected to a female connector is possible.

In a further advantageous implementation of a method, the busbar is enclosed by overmolding the busbar with a moldable plastic material by means of a mold such that only one and the same mold is used for manufacturing the housing of the terminal assembly having different plug patterns.

When the busbar is enclosed by overmolding by a moldable plastic material by means of a mold, this is an easy and cost-effective manner for manufacturing the terminal assembly.

In a further advantageous implementation of the method, wherein the busbar is surrounded by a frame and the frame is connected to the busbar in sections, the method comprises the further step: separating the frame from the busbar by cutting webs connecting the frame and the busbar.

The frame enables maintaining of the shape and the position of the busbar even if the busbar is disconnected due to the formation of the plug pattern. The frame enables a defined location of the busbar for being overmolded, wherein after the enclosing of the busbar by the housing, the manufacturing of the terminal assembly can easily be completed by cutting the webs connecting the frame and the busbar.

Subsequently, the invention is elucidated by means of embodiments referring to the attached drawings.

In particular,
- Fig. 1: shows a busbar as a base material;
- Fig. 2: shows the busbar of Fig. 1 prepared for an axial version of a plug pattern;
- Fig. 3: shows the busbar of Fig. 1 prepared for a radial version of the plug pattern;
- Fig. 4: shows a principal illustration of a terminal assembly including the busbar prepared for the axial version of the plug pattern in an intermediate manufacturing stage;
- Fig. 5: shows a principal illustration of the terminal assembly including the busbar prepared for the radial version of the plug pattern in the intermediate manufacturing stage;
- Fig. 6: shows an isometric view of the terminal assembly including the busbar prepared for the radial version of the plug pattern, wherein the plug connectors extend straight;
- Fig. 7: shows an isometric view of the terminal assembly including the busbar prepared for the radial version of the plug pattern, wherein the plug connectors extend angled;
- Fig. 8: shows a directionally dependent sensor having the terminal assembly; and
- Fig. 9: shows a flowchart of a method for manufacturing the terminal assembly.

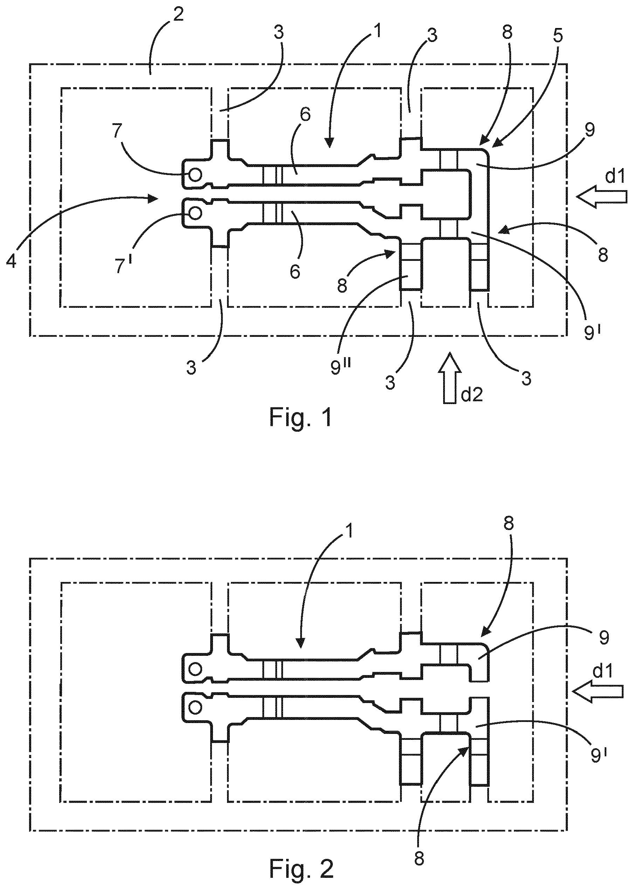

**Fig. 1** shows a busbar 1 as a base material. Formed as the base material, the busbar 1 is connected to a frame 2 surrounding the busbar 1. Thereto, webs 3 are provided and the busbar 1 is connected to the frame 2 in sections by means of the webs 3. The busbar 1 is illustrated by solid lines and the frame 2 and the webs 3 are illustrated by dotted lines.

The busbar 1 is basically U-shaped having legs 6 respectively having a first end and a second end, the first ends being connected by a bar portion forming the U-basis, and the legs 6 form an open side 4 at the second ends and an opposite side 5 opposite with respect to the open side 4. The basically U-shaped characteristic of the busbar 1 means that it has a longitudinal shape with basically parallel legs 6 which are connected at the opposite side 5 and which do not have a connection at the open side 4. In spite of the basically U-shaped characteristic, the busbar 1 can have areas laterally protruding from the-U-shape and the legs 6 must not be exactly parallel, in particular, they must not be parallel along their entire length. In alternative embodiments, the busbar 1 is not U-shaped but has another shape suitable for a respective application.

A direction from the opposite side 5 to the open side 4 is defined as a first direction d1 and a direction perpendicular to the first direction d1 is defined as a second direction d2. In alternative embodiments, the second direction d2 is not perpendicular to the first direction d1 but the second direction d2 encloses an angle with the first direction d1. Basically, this means that the first direction d1 and the second direction d2 are not parallel.

The busbar 1 comprises two first terminal areas 7, 7' in regions of ends of the legs 6 at the open side 4 and three second terminal areas 8 in a region of the busbar 1 at the opposite side 5.

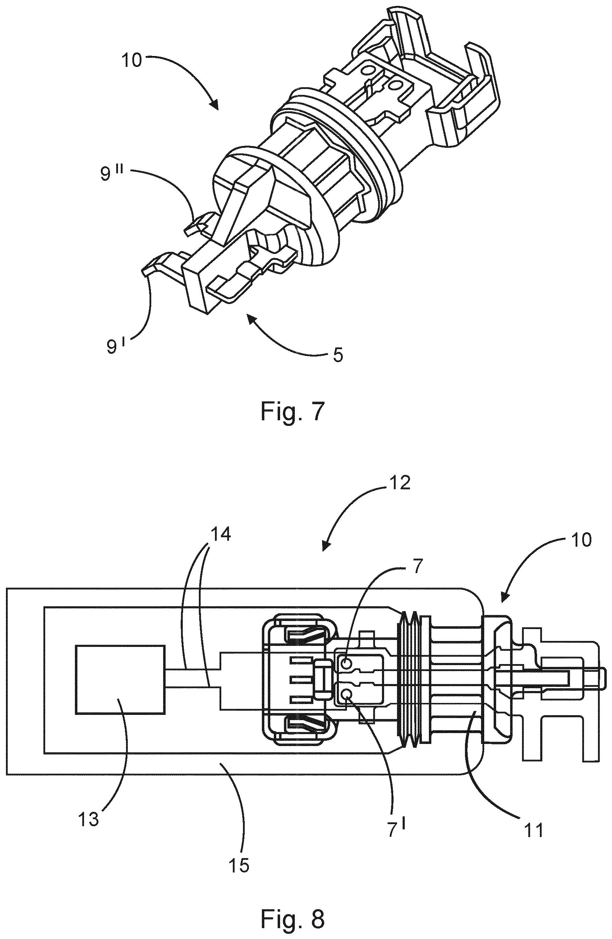

The first terminal areas 7, 7' are configured to be connected to a sensor element 13 (Fig. 8) by bonding effected by chemical reaction or thermal effects. Therefore, the first terminal areas 7, 7' can be connected to a cable by means of welding, in particular, resistance welding, soldering or bonding by means of a conductive adhesive. In alternative embodiments, other suitable connection types, e.g., clamping, are possible.

The second terminal areas 8 are configured to respectively form a plug connector 9, 9', 9", wherein a first one of the first terminal areas 7, the three second terminal areas 8 and a second one of the first terminal areas 7' are arranged in-line.

The plug connector 9 formed by a first one of the three second terminal areas 8 extends parallel to the first direction d1, the plug connector 9' formed by a second one of the three second terminal areas 8 extends parallel to the first direction d1 and parallel to the second direction d2, and the plug connector 9" formed by a third one of the three second terminal areas 8 extends parallel to the second direction d2. In particular, the plug connector 9' formed by the second one of the three second terminal areas 8 has a shape such that a first portion of the plug connector 9' extends parallel to the first direction d1 and a second portion of the plug connector 9' extends parallel to the second direction d2.

The busbar 1 provides a plug pattern having two adjacent plug connectors 9, 9', 9" which are connectable to a double-pole female connector (not shown). As described below, the plug pattern is formed by two adjacent ones of the three second terminal areas 8 by disconnecting or separating the busbar 1 between the two adjacent ones of the three second terminal areas 8 forming the plug pattern. Thereby, one of the plug connectors 9, 9', 9" is electrically connected to one of the first terminal areas 7, 7', the other one of the plug connectors 9, 9', 9" is electrically connected to the other one of the first terminal areas 7, 7', and there is no electrical connection between the disconnected second terminal areas 8.

**Fig. 2** shows the busbar 1 of Fig. 1 prepared for an axial version of the plug pattern. The busbar 1 provides the plug pattern formed by disconnecting the first one of the three second terminal areas 8 forming the plug connector 9 and the second one of the three second terminal areas 8 forming the plug connector 9'. Since the plug connector 9 and, particular, the first portion of the plug connector 9' extend in the first direction d1, the plug connector is formed such that the female connector is connectable in the first direction d1.

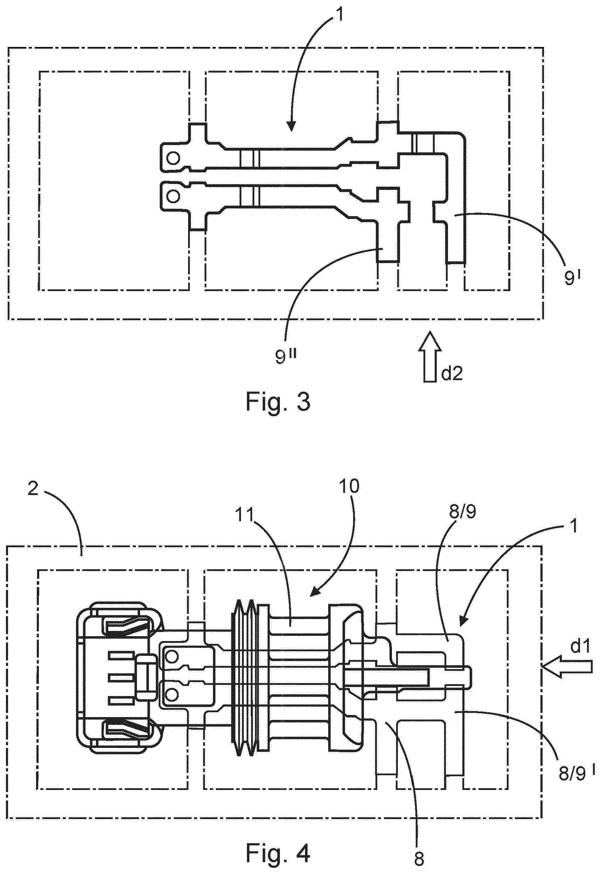

**Fig. 3** shows the busbar 1 of Fig. 1 prepared for a radial version of the plug pattern. The radial version means that the second direction d2 is a direction radial with respect to the longitudinal shape of the busbar 1 which, in turn, means that the second direction d2 is perpendicular to the first direction d1. The busbar 1 provides the plug pattern formed by disconnecting the second one of the three second terminal areas 8 forming the plug connector 9' and the third one of the three second terminal areas 8 forming the plug connector 9". Since, in particular, the second portion of the plug connector 9' and the plug connector 9" extend in the second direction d2, the plug connector is formed such that the female connector is connectable in the second direction d2.

From Fig. 2 and Fig. 3, it is to be seen that, depending on the two adjacent ones of the three second terminal areas 8 between which the busbar 1 is disconnected, two alternative plug patterns are formed. The plug patterns have an identical shape in order to fit to a same female connector; nevertheless, in alternative embodiments, the alternative plug patterns can be different.

**Fig. 4** shows a principal illustration of a terminal assembly 10 including the busbar 1 prepared for the axial version of the plug pattern in an intermediate manufacturing stage, namely, in a stage in which the busbar 1 is overmolded with a material of a housing 11 before the frame 2 is separated from the busbar 1. The material of the housing 11 comprises a plastic material, in particular PA6 GF30. In alternative embodiments, another suitable material can be used or the housing 11 is not formed by overmolding but it consists of separate parts, for example, prepared split pre-molds which can, e.g., be clipped on to form the housing 11. In a further alternative embodiment, the housing 11 is formed by a pre-mold of a plastic material provided with a living hinge.

The terminal assembly 10 includes the busbar 1 prepared for the axial version of the plug pattern which, as mentioned above, means that the busbar 1 is disconnected between the second terminal area 8 forming the plug connector 9 and the second terminal area 8 forming the connector 9'. Therefore, the plug pattern is formed such that the female connector is connectable in the first direction d1.

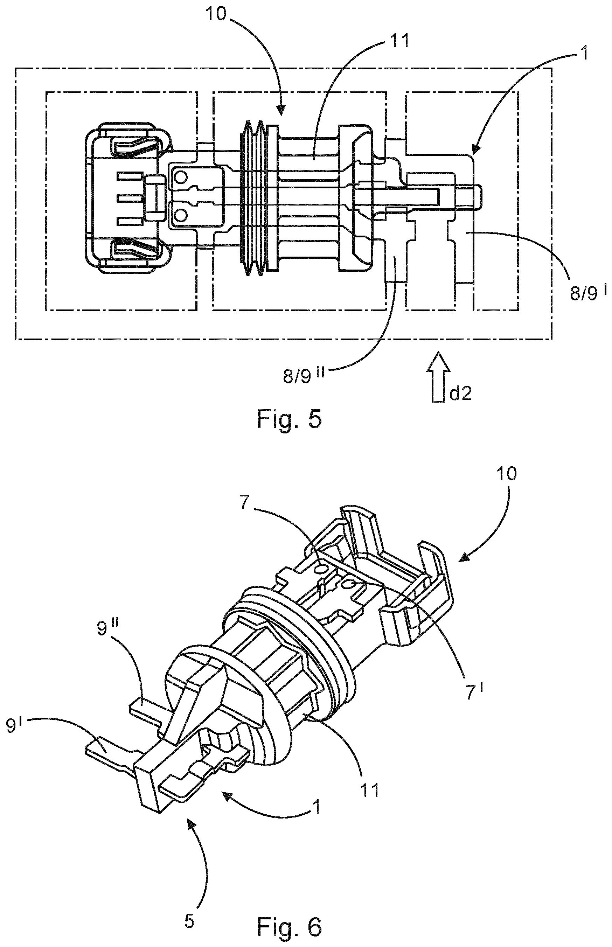

**Fig. 5** shows a principal illustration of the terminal assembly 10 including the busbar 1 prepared for the radial version of the plug pattern in the intermediate manufacturing stage. Therefore, the terminal assembly 10 shown in Fig. 5 differs from the terminal assembly 10 shown in Fig. 4 in that, in Fig. 5, the busbar 1 is disconnected between the second terminal area 8 forming the plug connector 9' and the second terminal area 8 forming the plug connector 9". Therefore, the plug pattern is formed such that the female connector is connectable in the second direction d2.

As to be seen from Fig. 4 and Fig. 5, the housing 11 of the terminal assembly 10 encloses the busbar 1 providing the plug pattern either formed such that the female connector is connectable in the first direction d1 or such that the female connector is connectable in the second direction d2. Therefore, the housings 11 are identical. In this context means "identical" that the basic shape and functional features are identical. Markings or a color of the housing can vary. In alternative embodiments, the housings 11 differ in a region where the plug connectors 9, 9', 9" are located.

**Fig. 6** shows an isometric view of the terminal assembly 10 including the busbar 1 prepared for the radial version of the plug pattern, wherein the plug connectors 9', 9" extend straight.

The characteristic that the plug connectors 9', 9" extend straight means that a region of the busbar 1 at the opposite side 5 forms a plane and the radial plug connectors 9', 9" are oriented parallel to the plane. Nevertheless, potential small elevations or indentions are possible without dissenting the existence of the plane.

The housing 11 partially encloses the busbar 1 such that the second terminal areas 8 are exposed.

Moreover, in Fig. 6, it is to be seen that the first terminal areas 7, 7' are not covered with the material of the housing 11 and, therefore, the first terminal areas 7, 7' are also exposed. Nevertheless, in alternative embodiments, the first terminal areas 7, 7' have already been connected before this manufacturing stage and, therefore, the first terminal areas 7, 7' can be covered with the material of the housing 11.

**Fig. 7** shows an isometric view of the terminal assembly 10 including the busbar 1 prepared for the radial version of the plug pattern, wherein the plug connectors 9', 9" extend angled.

The terminal assembly 10 shown in Fig. 7 differs from the terminal assembly 10 shown in Fig. 6 in that, although the plane is also formed in the region of the busbar 1 at the opposite side 5, the plug connectors 9', 9" enclose an angle with the plane so that they extend angled. The shown plug connectors 9', 9" enclose an angle of about 45° with the plane and are directed downwards. Nevertheless, in alternative embodiments, the plug connectors 9', 9" enclose another angle selected between a straight shape and a 90°-angle, wherein the plug connectors 9', 9" can also extend upwardly.

**Fig. 8** shows an active wheel speed sensor as a directionally dependent sensor 12 having the terminal assembly 10. The sensor 12 further comprises the directionally dependent sensor element 13 which is connected to the busbar 1, in particular, to the respective first terminal area 7, 7' by means of connection lines 14. The connection lines 14 are connected to the first terminal areas 7 by means of resistance welding. Alternatively, another suitable connection type as mentioned above is used. Moreover, the directionally dependent sensor 12 is configured alternatively as to be another sensor than the active wheel speed sensor.

The sensor 12 comprises a sensor housing 15. The sensor housing 15 is manufactured by partially overmolding the terminal assembly 10 and, thereby, joined to the housing 11 of the terminal assembly 10. Alternatively, the sensor housing 15 can be manufactured separately and joined with the terminal assembly 10 by means of another suitable connection type, e.g., bonding or ultrasonic welding.

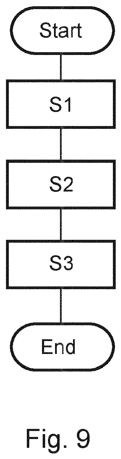

Fig. 9 shows a method for manufacturing the terminal assembly 10.

The method for manufacturing the terminal assembly 10 comprises, as step S1, providing the busbar 1 having the three terminal areas 8 respectively forming a plug connector 9, 9', 9". The busbar 1 is provided by stamping a suitable sheet metal by a punching machine, wherein multiple busbars 1 can be manufactured simultaneously or subsequently from one sheet-metal. By the webs 3, the busbar 1 is connected to a frame 2 which, in turn, forms part of the frame 2 for the next busbar 1 in the sheet-metal.

Simultaneously or subsequently, in step S2, the busbar 1 is disconnected between two adjacent ones of the three terminal areas 8 by cutting-out a section of the busbar 1 between the two adjacent ones of the second terminal areas 8 forming the plug pattern connectable to the double-pole female connector by means of a punching tool or, alternatively, by means of, e.g., a laser cutting machine. Thereby, in the case that the bus bar 1 is basically U-shaped as described above, the section is cut-out between the first one of the three second terminal areas 8 and the second one of the three second terminal areas 8 such that the plug connectors 9, 9' forming the plug pattern extend in the first direction d1 or, alternatively, the section is cut-out between the second one of the three second terminal areas 8 and the third one of the three second terminal areas 8 such that the plug connectors 9', 9" forming the plug pattern extend in the second direction d2. In an alternative embodiment of the busbar 1 having all of the plug connectors 9, 9', 9" extending in the same directions, the plug patterns can be directed such that they extend in the same direction.

In step S3, the busbar 1 is enclosed by the housing 11 such that the three second terminal areas 8 are exposed. Thereby, the metal sheet or a part of the metal sheet is introduced into a mold so that the busbar 1 is enclosed by overmolding the busbar 1 with the material of the housing 11, in particular a moldable plastic material, by means of a mold and the housing 11 is manufactured by means of an injection molding machine. In an alternative embodiment, the busbar 1 is enclosed by the prepared split pre-molds which can, e.g., be clipped on to form the housing 11.

Subsequently, or alternatively before enclosing the busbar 1 with the material of the housing 11, the frame 2 is separated from the busbar 1 by cutting the webs 3 connecting the frame 2 and the busbar 1 by means of a punching tool or, alternatively, by means of, e.g., a laser cutting machine. Alternatively, if the busbar 1 has been prepared without the frame 2, the step of separating the frame 2 from the busbar 1 is not necessary.

In a further alternative embodiment, the section of the busbar 1 for defining the plug pattern is cut-out after step S3 when the busbar 1 is already enclosed with the housing 11 such that the decision of the direction of the plug pattern is done after the remaining manufacturing steps has been completed.

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art.

In the claims, the word "comprising" does not exclude other elements or steps, and the indefinite article "a" or "an" does not exclude a plurality.

### LIST OF REFERENCE SIGNS

- 1: busbar
- 2: frame
- 3: web
- 4: open side
- 5: opposite side
- 6: leg
- 7, 7': first terminal area
- 8: second terminal area
- 9, 9', 9": plug connector
- 10: terminal assembly
- 11: housing
- 12: sensor
- 13: sensor element
- 14: connection lines
- 15: sensor housing

- d1: first direction
- d2: second direction

## Claims

1. A terminal assembly (10) for a directionally dependent sensor (12), the terminal assembly (10) comprising:
a busbar (1) and
a housing (11), wherein
the busbar (1) comprises
two first terminal areas (7) configured to be connected to a sensor element (13), and
three second terminal areas (8) configured to respectively form a plug connector (9, 9', 9"), wherein a first one of the first terminal areas (7), the three second terminal areas (8) and a second one of the first terminal areas (7') are arranged in-line, wherein
the housing (11) is configured to partially enclose the busbar (1) such that the second terminal areas (8) are exposed, and
the busbar (1) is configured to provide a plug pattern having two adjacent plug connectors (9, 9', 9") configured to be connectable to a double-pole female connector, which plug pattern is configured to be formed by two adjacent ones of the three second terminal areas (8) by disconnecting the busbar (1) between the two adjacent ones of the three second terminal areas (8), wherein,
depending on the two adjacent ones of the three second terminal areas (8) between which the busbar (1) is disconnected, two different plug patterns are formed,
wherein the bus bar (1) is basically U-shaped having legs (6) respectively having a first end and a second end, the first ends being connected by a bar portion forming the U-basis and the legs (6) form an open side (4) at the second ends,
the two first terminal areas (7, 7') are located in regions of the second ends of the legs (6) at the open side (4), and the three second terminal areas (8) are located in a region of the busbar (1) at an opposite side (5) being opposite with respect to the open side (4),
a direction from the open side (4) to the opposite side (5) of the busbar (1) is defined as a first direction (d1) and a direction enclosing an angle with the first direction (d1) is defined as a second direction (d2), and
the plug connector (9) formed by a first one of the three second terminal areas (8) extends in the first direction (d1), the plug connector (9') formed by a second one of the three second terminal areas (8) extends in the first direction (d1) and in the second direction (d2), and the plug connector (9") formed by a third one of the three second terminal areas (8) extends in the second direction (d2), such that
by disconnecting the busbar (1) between the first one and the second one of the three second terminal areas (8), the plug pattern is formed such that the female connector is connectable in the first direction (d1), and,
by disconnecting the busbar (1) between the second one and the third one of the three second terminal areas (8), the plug pattern is formed such that the female connector is connectable in the second direction (d2).

2. The terminal assembly (10) of claim 1, wherein
the busbar (1) comprises a predefined cutting-out section, and the busbar (1) is configured to be disconnected by cutting-out the predefined cutting-out section between the two adjacent ones of the three second terminal (8) areas in order to form the plug pattern.

3. The terminal assembly of claim 1 or 2, wherein
the region of the bus bar (1) at the opposite side (5) forms a plane, and
the plug connectors (9', 9") extending in the second direction (d2) enclose an angle with the plane.

4. The terminal assembly (10) of anyone of the preceding claims, wherein
the housing (11) of the terminal assembly (10) is configured to enclose the busbar (1) providing the plug pattern either formed such that the female connector is connectable in the first direction (d1) or such that the female connector is connectable in the second direction (d2).

5. The terminal assembly (10) of anyone of the preceding claims, wherein
the housing (11) is configured to partially enclosed the busbar (1) such that the first terminal areas (7) are exposed.

6. The terminal (10) assembly of anyone of the preceding claims, wherein
the terminal assembly (10) comprises a housing (11) configured to be manufactured by overmolding the busbar (1) with a material of the housing (11).

7. The terminal assembly (10) of anyone of the preceding claims, wherein
the busbar (1) is surrounded by a frame (2) and the frame (2) is connected to the busbar (1) in sections.

8. A directionally dependent sensor (12) comprising
a terminal assembly (10) according to anyone of the preceding claims,
a sensor element (13) connected to the two first terminal areas (7) of the busbar (1), and
a sensor housing (15) joined to the housing (11) of the terminal assembly (10).

9. The directionally dependent sensor (12) of claim 8, wherein
the directionally dependent sensor (12) is configured to be an active wheel speed sensor.

10. A method for manufacturing a terminal assembly (10) comprising the steps:
providing a busbar (1) having three second terminal areas (8) respectively forming a plug connector (9, 9', 9") (S1);
disconnecting the busbar (1) between two adjacent ones of the three second terminal areas (8) by cutting-out a section of the bus bar (1) between the two adjacent ones of the second terminal areas (8) for forming a plug pattern connectable to a double-pole female connector (S2); and
enclosing the busbar (1) with a housing (11) such that the three second terminal areas (8) are exposed (S3), wherein
the bus bar (1) is basically U-shaped having legs (6) respectively having a first end and a second end, the first ends being connected by a bar portion forming the U-basis, and the legs (6) form an open side at the second ends,
two first terminal areas (7) configured to be connected to a sensor element (13) are located in regions of the second ends of legs (6) of the busbar (1) at the open side and the three second terminal areas (8) are located in a region of the busbar (1) at an opposite side (5) being opposite with respect to the open side (4),
a direction from the open side (4) to the opposite side (5) is defined as a first direction (d1) and a direction enclosing an angle with the first direction (d1) is defined as a second direction (d2),
a plug connector (9) formed by a first one of the three second terminal areas (8) extends in the first direction (d1), a plug connector (9') formed by a second one of the three second terminal areas (8) extends in the first direction (d1) and in the second direction (d2), and a plug connector (9") formed by a third one of the three second terminal areas (8) extends in the second direction (d2), and
a plug pattern having two adjacent plug connectors (9, 9', 9") is configured to be connectable to a double-pole female connector,
wherein
the section is cut-out between the first one of the three second terminal areas (8) and the second one of the three second terminal areas (8) such that the plug connectors (9, 9') forming the plug pattern extend in the first direction (d1), or, alternatively,
the section is cut-out between the second one of the three second terminal areas (8) and the third one of the three second terminal areas (8) such that the plug connectors (9', 9") forming the plug pattern extend in the second direction (d2).

11. The method of claim 10, wherein
the busbar (1) is enclosed by overmolding the busbar (1) with a moldable plastic material by means of a mold such that only one and the same mold is used for manufacturing the housing (11) of the terminal assembly (10) having different plug patterns.

12. The method of anyone of claims 10 and 11, wherein the busbar (1) is surrounded by a frame (2) and the frame is connected to the busbar in sections, comprising the further step:
separating the frame (2) from the busbar (1) by cutting webs (3) connecting the frame (2) and the busbar (1).

## Patentansprüche

1. Anschlussbaugruppe (10) für einen richtungsabhängigen Sensor (12), wobei die Anschlussbaugruppe (10) umfasst:
eine Sammelschiene (1) und
ein Gehäuse (11), wobei
die Sammelschiene (1) umfasst:
zwei erste Anschlussbereiche (7), welche dazu konfiguriert sind, mit einem Sensorelement (13) verbunden zu werden, und
drei zweite Anschlussbereiche (8), welche dazu konfiguriert sind, jeweils einen Steckverbinder (9, 9', 9") zu bilden, wobei ein erster der ersten Anschlussbereiche (7), die drei zweiten Anschlussbereiche (8) und ein zweiter der ersten Anschlussbereiche (7') in einer Linie angeordnet sind, wobei
das Gehäuse (11) dazu konfiguriert ist, die Sammelschiene (1) teilweise einzuschließen, sodass die zweiten Anschlussbereiche (8) freiliegen, und
die Sammelschiene (1) dazu konfiguriert ist, ein Steckerbild bereitzustellen, welches zwei benachbarte Steckverbinder (9, 9', 9") aufweist, welche dazu konfiguriert sind, mit einer zweipoligen Buchse verbindbar zu sein, wobei das Steckerbild dazu konfiguriert ist, durch zwei benachbarte der drei zweiten Anschlussbereiche (8) durch Trennen der Sammelschiene (1) zwischen den zwei benachbarten der drei zweiten Anschlussbereiche (8) gebildet zu werden, wobei
abhängig von den zwei benachbarten der drei zweiten Anschlussbereiche (8), zwischen welchen die Sammelschiene (1) getrennt wird, zwei unterschiedliche Steckerbilder gebildet werden,
wobei die Sammelschiene (1) grundsätzlich U-förmig ist und Schenkel (6) aufweist, welche jeweils ein erstes Ende und ein zweites Ende aufweisen, wobei die ersten Enden durch einen die U-Basis bildenden Schienenabschnitt verbunden sind und die Schenkel (6) an den zweiten Enden eine offene Seite (4) bilden,
die zwei ersten Anschlussbereiche (7, 7') in Bereichen der zweiten Enden der Schenkel (6) an der offenen Seite (4) liegen und die drei zweiten Anschlussbereiche (8) in einem Bereich der Sammelschiene (1) an einer gegenüberliegenden Seite (5) liegen, welche in Bezug auf die offene Seite (4) gegenüberliegend ist,
eine Richtung von der offenen Seite (4) zur gegenüberliegenden Seite (5) der Sammelschiene (1) als eine erste Richtung (d1) definiert ist und eine Richtung, welche mit der ersten Richtung (d1) einen Winkel einschließt, als eine zweite Richtung (d2) definiert ist, und
der durch einen ersten der drei zweiten Anschlussbereiche (8) gebildete Steckverbinder (9) sich in die erste Richtung (d1) erstreckt, der durch einen zweiten der drei zweiten Anschlussbereiche (8) gebildete Steckverbinder (9') sich in die erste Richtung (d1) und in die zweite Richtung (d2) erstreckt und der durch einen dritten der drei zweiten Anschlussbereiche (8) gebildete Steckverbinder (9") sich in die zweite Richtung (d2) erstreckt, sodass
durch Trennen der Sammelschiene (1) zwischen dem ersten und dem zweiten der drei zweiten Anschlussbereiche (8) das Steckerbild so ausgebildet wird, dass die Buchse in der ersten Richtung (d1) verbindbar ist, und
durch Trennen der Sammelschiene (1) zwischen dem zweiten und dem dritten der drei zweiten Anschlussbereiche (8) das Steckerbild so ausgebildet wird, dass die Buchse in der zweiten Richtung (d2) verbindbar ist.

2. Anschlussbaugruppe (10) nach Anspruch 1, wobei
die Sammelschiene (1) einen vordefinierten Ausschneideabschnitt umfasst, und die Sammelschiene (1) dazu konfiguriert ist, durch Ausschneiden des vordefinierten Ausschneideabschnitts zwischen den zwei benachbarten der drei zweiten Anschlussbereiche (8) getrennt zu werden, um das Steckerbild zu bilden.

3. Anschlussbaugruppe nach Anspruch 1 oder Anspruch 2, wobei
der Bereich der Sammelschiene (1) auf der gegenüberliegenden Seite (5) eine Ebene bildet, und
die in die zweite Richtung (d2) verlaufenden Steckverbinder (9', 9") mit der Ebene einen Winkel einschließen.

4. Anschlussbaugruppe (10) nach einem der vorstehenden Ansprüche, wobei
das Gehäuse (11) der Anschlussbaugruppe (10) dazu konfiguriert ist, die Sammelschiene (1) einzuschließen, wodurch das Steckerbild entweder so geformt bereitstellt wird, dass die Buchse in der ersten Richtung (d1) verbindbar ist, oder dass die Buchse in der zweiten Richtung (d2) verbindbar ist.

5. Anschlussbaugruppe (10) nach einem der vorstehenden Ansprüche, wobei
das Gehäuse (11) dazu konfiguriert ist, die Sammelschiene (1) teilweise einzuschließen, sodass die ersten Anschlussbereiche (7) freiliegen.

6. Anschlussbaugruppe (10) nach einem der vorstehenden Ansprüche, wobei
die Anschlussbaugruppe (10) ein Gehäuse (11) umfasst, welches dazu konfiguriert ist, durch Umspritzen der Sammelschiene (1) mit einem Material des Gehäuses (11) hergestellt zu werden.

7. Anschlussbaugruppe (10) nach einem der vorstehenden Ansprüche, wobei
die Sammelschiene (1) von einem Rahmen (2) umgeben ist und der Rahmen (2) abschnittsweise mit der Sammelschiene (1) verbunden ist.

8. Richtungsabhängiger Sensor (12), umfassend
eine Anschlussbaugruppe (10) nach einem der vorstehenden Ansprüche,
ein Sensorelement (13), welches mit den zwei ersten Anschlussbereichen (7) der Sammelschiene (1) verbunden ist, und
ein Sensorgehäuse (15), welches an das Gehäuse (11) der Anschlussbaugruppe (10) angefügt ist.

9. Richtungsabhängiger Sensor (12) nach Anspruch 8, wobei
der richtungsabhängige Sensor (12) dazu konfiguriert ist, ein aktiver Raddrehzahlsensor zu sein.

10. Verfahren zum Herstellen einer Anschlussbaugruppe (10), umfassend die folgenden Schritte:
Bereitstellen einer Sammelschiene (1), welche drei zweite Anschlussbereiche (8) aufweist, welche jeweils einen Steckverbinder (9, 9', 9") bilden (S1);
Trennen der Sammelschiene (1) zwischen zwei benachbarten der drei zweiten Anschlussbereiche (8) durch Ausschneiden eines Abschnitts der Sammelschiene (1) zwischen den zwei benachbarten der zweiten Anschlussbereiche (8), um ein Steckerbild zu bilden, welches mit einer zweipoligen Buchse verbindbar ist (S2); und
Einschließen der Sammelschiene (1) mit einem Gehäuse (11), sodass die drei zweiten Anschlussbereiche (8) freiliegen (S3), wobei
die Sammelschiene (1) grundsätzlich U-förmig ist und Schenkel (6) aufweist, welche jeweils ein erstes Ende und ein zweites Ende aufweisen, wobei die ersten Enden durch einen die U-Basis bildenden Schienenabschnitt verbunden sind und die Schenkel (6) an den zweiten Enden eine offene Seite bilden,
zwei erste Anschlussbereiche (7), welche dazu konfiguriert sind, mit einem Sensorelement (13) verbunden zu werden, in Bereichen der zweiten Enden von Schenkeln (6) der Sammelschiene (1) an der offenen Seite liegen und die drei zweiten Anschlussbereiche (8) in einem Bereich der Sammelschiene (1) an einer gegenüberliegenden Seite (5) liegen, welche in Bezug auf die offene Seite (4) gegenüberliegend ist,
eine Richtung von der offenen Seite (4) zur gegenüberliegenden Seite (5) als eine erste Richtung (d1) definiert ist und eine Richtung, welche mit der ersten Richtung (d1) einen Winkel einschließt, als eine zweite Richtung (d2) definiert ist,
ein durch einen ersten der drei zweiten Anschlussbereiche (8) gebildeter Steckverbinder (9) sich in die erste Richtung (d1) erstreckt, ein durch einen zweiten der drei zweiten Anschlussbereiche (8) gebildeter Steckverbinder (9') sich in die erste Richtung (d1) und in die zweite Richtung (d2) erstreckt und ein durch einen dritten der drei zweiten Anschlussbereiche (8) gebildeter Steckverbinder (9") sich in die zweite Richtung (d2) erstreckt, und
ein Steckerbild, welches zwei benachbarte Steckverbindern (9, 9', 9") aufweist, dazu konfiguriert ist, mit einer zweipoligen Buchse verbindbar zu sein,
wobei
der Abschnitt zwischen dem ersten der drei zweiten Anschlussbereiche (8) und dem zweiten der drei zweiten Anschlussbereiche (8) ausgeschnitten ist, sodass die das Steckerbild bildenden Steckverbinder (9, 9') in der ersten Richtung (d1) verlaufen, oder alternativ,
der Abschnitt zwischen dem zweiten der drei zweiten Anschlussbereiche (8) und dem dritten der drei zweiten Anschlussbereiche (8) ausgeschnitten ist, sodass die das Steckerbild bildenden Steckverbinder (9, 9') in der zweiten Richtung (d2) verlaufen.

11. Verfahren nach Anspruch 10, wobei
die Sammelschiene (1) durch Umspritzen der Sammelschiene (1) mit einem formbaren Kunststoffmaterial mittels einer Form eingeschlossen ist, sodass für die Herstellung des Gehäuses (11) der Anschlussbaugruppe (10), welcher unterschiedliche Steckerbilder aufweist, nur ein und dieselbe Form verwendet wird.

12. Verfahren nach einem der Ansprüche 10 und 11, wobei die Sammelschiene (1) von einem Rahmen (2) umgeben ist und der Rahmen abschnittsweise mit der Sammelschiene verbunden ist, umfassend den weiteren Schritt:
Trennen des Rahmens (2) von der Sammelschiene (1) durch Durchtrennen von Stegen (3), welche den Rahmen (2) und die Sammelschiene (1) verbinden.

## Revendications

1. Ensemble borne (10) pour un capteur dépendant de la direction (12), l'ensemble borne (10) comprenant :
une barre omnibus (1) et
un boîtier (11), dans lequel
la barre omnibus (1) comprend
deux premières zones de borne (7) configurées pour être connectées à un élément capteur (13), et
trois secondes zones de borne (8) configurées pour former respectivement un connecteur mâle (9, 9', 9"), dans lequel une première zone de borne des premières zones de borne (7), les trois secondes zones de borne (8) et une seconde zone de borne des premières zones de borne (7') sont agencées en ligne, dans lequel
le boîtier (11) est configuré pour enfermer partiellement la barre omnibus (1) de telle sorte que les secondes zones de borne (8) soient exposées, et
la barre omnibus (1) est configurée pour fournir un motif enfichable présentant deux connecteurs mâles (9, 9', 9") adjacents configurés pour pouvoir être connectés à un connecteur femelle bipolaire, lequel motif enfichable est configuré pour être formé par deux zones adjacentes des trois secondes zones de borne (8) en déconnectant la barre omnibus (1) entre les deux zones adjacentes des trois secondes zones de borne (8), dans lequel,
en fonction des deux zones adjacentes des trois secondes zones de borne (8) entre lesquelles la barre omnibus (1) est déconnectée, deux motifs enfichables différents sont formés,
dans lequel la barre omnibus (1) est essentiellement en forme de U présentant des branches (6) présentant respectivement une première extrémité et une seconde extrémité, les premières extrémités étant connectées par une partie de barre formant la base en U et les branches (6) forment un côté ouvert (4) aux secondes extrémités,
les deux premières zones de borne (7, 7') sont situées dans des régions des secondes extrémités des branches (6) du côté ouvert (4), et les trois secondes zones de borne (8) sont situées dans une région de la barre omnibus (1) du côté opposé (5) qui est opposé au côté ouvert (4),
une direction allant du côté ouvert (4) au côté opposé (5) de la barre omnibus (1) est définie comme une première direction (d1) et une direction formant un angle avec la première direction (d1) est définie comme une seconde direction (d2), et
le connecteur mâle (9) formé par une première zone de borne des trois secondes zones de borne (8) s'étend dans la première direction (d1), le connecteur mâle (9') formé par une deuxième zone de borne des trois secondes zones de borne (8) s'étend dans la première direction (d1) et dans la seconde direction (d2), et le connecteur mâle (9") formé par une troisième zone de borne des trois secondes zones de borne (8) s'étend dans la seconde direction (d2), de telle sorte que
en déconnectant le barre omnibus (1) entre la première et la deuxième zones de borne des trois secondes zones de borne (8), le motif enfichable soit formé de telle sorte que le connecteur femelle puisse être connecté dans la première direction (d1), et,
en déconnectant la barre omnibus (1) entre la deuxième et la troisième zones de bornes des trois secondes zones de borne (8), le motif enfichable soit formé de telle sorte que le connecteur femelle puisse être connecté dans la seconde direction (d2).

2. Ensemble borne (10) selon la revendication 1, dans lequel
la barre omnibus (1) comprend une section de découpe prédéfinie, et la barre omnibus (1) est configurée pour être déconnectée en découpant la section de découpe prédéfinie entre les deux zones adjacentes des trois secondes zones de borne (8) afin de former le motif enfichable.

3. Ensemble borne selon la revendication 1 ou 2, dans lequel
la région de la barre omnibus (1) du côté opposé (5) forme un plan, et
les connecteurs mâles (9', 9") s'étendant dans la seconde direction (d2) forment un angle avec le plan.

4. Ensemble borne (10) selon l'une quelconque des revendications précédentes, dans lequel
le boîtier (11) de l'ensemble borne (10) est configuré pour enfermer la barre omnibus (1) fournissant le motif enfichable formé soit de telle sorte que le connecteur femelle puisse être connecté dans la première direction (d1), soit de telle sorte que le connecteur femelle puisse être connecté dans la seconde direction (d2).

5. Ensemble borne (10) selon l'une quelconque des revendications précédentes, dans lequel
le boîtier (11) est configuré pour enfermer partiellement la barre omnibus (1) de telle sorte que les premières zones de borne (7) soient exposées.

6. Ensemble borne (10) selon l'une quelconque des revendications précédentes, dans lequel
l'ensemble borne (10) comprend un boîtier (11) configuré pour être fabriqué par surmoulage de la barre omnibus (1) avec un matériau du boîtier (11).

7. Ensemble borne (10) selon l'une quelconque des revendications précédentes, dans lequel
le barre omnibus (1) est entourée d'un cadre (2) et le cadre (2) est connecté à la barre omnibus (1) par sections.

8. Capteur dépendant de la direction (12) comprenant
un ensemble borne (10) selon l'une quelconque des revendications précédentes,
un élément capteur (13) connecté aux deux premières zones de borne (7) de la barre omnibus (1), et
un boîtier de capteur (15) relié au boîtier (11) de l'ensemble borne (10).

9. Capteur dépendant de la direction (12) selon la revendication 8, dans lequel
le capteur dépendant de la direction (12) est configuré pour être un capteur de vitesse de roue actif.

10. Procédé de fabrication d'un ensemble borne (10) comprenant les étapes suivantes :
la fourniture d'une barre omnibus (1) présentant trois secondes zones de borne (8) formant respectivement un connecteur mâle (9, 9', 9") (S1) ;
la déconnexion de la barre omnibus (1) entre deux zones adjacentes des trois secondes zones de borne (8) en découpant une section de la barre omnibus (1) entre les deux zones adjacentes des secondes zones de borne (8) pour former un motif enfichable pouvant être connecté à un connecteur femelle bipolaire (S2) ; et
l'enfermement de la barre omnibus (1) dans un boîtier (11) de telle sorte que les trois secondes zones de borne (8) soient exposées (S3), dans lequel
la barre omnibus (1) est essentiellement en forme de U présentant des branches (6) présentant respectivement une première extrémité et une seconde extrémité, les premières extrémités étant connectées par une partie de barre formant la base en U, et les branches (6) forment un côté ouvert aux secondes extrémités,
deux premières zones de borne (7) configurées pour être connectées à un élément capteur (13) sont situées dans des régions des secondes extrémités des branches (6) de la barre omnibus (1) du côté ouvert et les trois secondes zones de borne (8) sont situées dans une région de la barre omnibus (1) d'un côté opposé (5) qui est opposé au côté ouvert (4),
une direction allant du côté ouvert (4) au côté opposé (5) est définie comme une première direction (d1) et une direction formant un angle avec la première direction (d1) est définie comme une seconde direction (d2),
un connecteur mâle (9) formé par une première zone de borne des trois secondes zones de borne (8) s'étend dans la première direction (d1), un connecteur mâle (9') formé par une deuxième zone de borne des trois secondes zones de borne (8) s'étend dans la première direction (d1) et dans la seconde direction (d2), et un connecteur mâle (9") formé par une troisième zone de borne des trois secondes zones de borne (8) s'étend dans la seconde direction (d2), et
un motif enfichable comportant deux connecteurs mâles (9, 9', 9") adjacents est configuré pour pouvoir être connecté à un connecteur femelle bipolaire,
dans lequel
la section est découpée entre la première zone de borne des trois secondes zones de borne (8) et la deuxième zone de borne des trois secondes zones de borne (8) de telle sorte que les connecteurs mâles (9, 9') formant le motif enfichable s'étendent dans la première direction (d1), ou, en variante,
la section est découpée entre la deuxième zone de borne des trois secondes zones de borne (8) et la troisième zone de borne des trois secondes zones de borne (8) de telle sorte que les connecteurs mâles (9', 9") formant le motif enfichable s'étendent dans la seconde direction (d2).

11. Procédé selon la revendication 10, dans lequel
la barre omnibus (1) est enfermée par surmoulage de la barre omnibus (1) avec une matière plastique pouvant être moulée au moyen d'un moule de telle sorte qu'un seul et même moule soit utilisé pour fabriquer le boîtier (11) de l'ensemble borne (10) présentant différents motifs enfichables.

12. Procédé selon l'une quelconque des revendications 10 et 11, dans lequel la barre omnibus (1) est entourée d'un cadre (2) et le cadre est connecté à la barre omnibus par sections, comprenant l'étape supplémentaire suivante :
la séparation du cadre (2) de la barre omnibus (1) en coupant des bandes (3) connectant le cadre (2) et la barre omnibus (1).
